# EUROPEAN PATENT SPECIFICATION

(11) **EP 2 607 766 B1**
(45) Date of publication and mention of the grant of the patent: **27.04.2016**
(21) Application number: 11194266.0
(22) Date of filing: 19.12.2011
(51) Int. Cl.: F16L 27/12, F23J 13/04

(54) **Clamping device for flue gas pipes**
Klemmvorrichtung für Rauchgasleitungen
Dispositif de serrage pour tuyaux de gaz combustible

(43) Date of publication of application: 26.06.2013
(73) Proprietor: M & G Group Europe B.V., 9403 AB Assen (NL)
(72) Inventor: van Dijk, Rene, 9501 CA Stadskanaal (NL); Bruining, Hendrik, 9471 BS Zuidlaren (NL)
(74) Representative: Nederlandsch Octrooibureau

(56) References cited:
- EP-A2- 1 136 741
- GB-A- 2 146 404
- JP-A- 7 119 870
- JP-A- 2002 156 079
- JP-A- 2007 292 268
- US-A- 3 783 178

## Description

### Field of the invention

The present invention relates to a clamping device for connecting a first pipe end to a second pipe end.

### Prior art

Such a clamping device is e.g. known from Dutch patent application NL1015628, which discloses a flue gas outlet channel provided with coupling parts for connecting male and female end parts of flue gas pipes. The coupling parts are provided with sealing means for making the assembled flue gas outlet channel gas tight, and with teeth shaped elements for fixing the relative position of the male and female end part. The document JP 2002 156079A discloses another known device.

### Summary of the invention

The present invention seeks to provide a clamping device which allows movement between two pipe ends due to thermal expansion, yet also enables to withstand a pulling force between the pipes when assembled.

Known connection arrangements rely on deformation of the material of one or both pipe ends, and thus can no longer move relative to one another due to thermal influences.

According to the present invention, a clamping device according to the preamble defined above is provided, wherein the clamping device comprises a main structural part, the main structural part comprising fixation elements for holding the clamping device onto the first pipe end without movement, and a gripper element for clamping onto an outer surface of the second pipe end, wherein the gripper element is axially moveable over a predetermined distance within the main structural part. This clamping device embodiment allow mutual movement of two pipes in a flue gas environment, yet also allows a good and reliable structural arrangement with sufficient resistance against the required pulling forces.

In a further embodiment, the fixation elements comprise a first edge and a second edge projecting inwardly of the main structural part, and the first pipe end is provided with an axially extending ridge and a pipe edge, which axially extending ridge and pipe edge in operation co-operate with the first edge and second edge. These structural elements allow to implement the needed functional aspects of the clamping device in a simple and effective manner.

The clamping device in a further embodiment comprises a third edge projecting inwardly of the main structural part, the axial distance between the second edge and third edge defining the predetermined distance. In a specific embodiment, the predetermined distance is about 1 cm. The combination of edges forming part of the clamping device (or main structural part) and the axially moveable gripping element, in combination with corresponding structural features of the pipe ends allows to provide a reliable and well functioning clamping device.

The gripper element comprises a contact part made of compressible material in a further embodiment, e.g. of rubber type of material. This provides a good gripping contact with the second pipe end. In a further embodiment, the gripper element is manufactured in a single (injection) molding operation. This can even be accomplished in the embodiment where the gripper element comprises the contact part.

The second pipe end has an outer diameter smaller than an inner diameter of the first pipe end. This male-female end configuration allows a simple combination and assembly of a larger outlet gas pipe channel.

In an even further embodiment, the clamping device further comprises an auxiliary structural part provided with the third edge, the auxiliary structural part being attachable to the main structural part. This allows to produce the main and auxiliary structural parts as separate elements, which can be assembled easily with the gripper element into the clamping device. As the parts can then have a suitable form, the main structural part and auxiliary structural part are injection mold parts in a further embodiment.

The main structural part, gripper element of the clamping device each comprise two semi-cylindrical parts in a further embodiment. This allows easier production of the elements of the clamping device, and still allows simple use of the clamping device. In one embodiment the semi-cylindrical parts of the gripper element are connectable to each other by a double arresting arrangement. In a further embodiment, the semi-cylindrical parts of the gripper element are connectable to each other by a combination of a hinge structure and an arrester arrangement. The latter allows to assemble the clamping device as a single piece, which can be easily used when installing flue gas pipes.

### Short description of drawings

The present invention will be discussed in more detail below, using a number of exemplary embodiments, with reference to the attached drawings, in which
Fig. 1 shows a cross sectional view of a clamping device according to an embodiment of the present invention installed on two pipe ends, in a first operational position;
Fig. 2 shows a perspective view of the clamping device of Fig 1 on two pipe ends, in a first operational position;
Fig. 3 shows a perspective view of the clamping device in a second operational position; and
Fig. 4 shows a cross sectional view of the clamping device in a second operational position.

### Detailed description of exemplary embodiments

In flue gas outlet systems, pipe segments are connected to each other to build an outlet channel system from e.g. a combustion system such as a heating system in a building to an outside environment. The pipe segments are formed at their ends to allow easy assembly, e.g. by having pipe ends with different diameter (male-female end connection parts). In one of the pipe ends, usually a groove is provided accommodating a sealing element, to make sure the connections between two pipe ends is gas tight.

Building regulations impose several strict requirements on such outlet channel systems, such as ability to be operated within a wide temperature range (withstanding hot exhaust gases from the combustion system) and the ability to remain intact under loading conditions which may arise due to construction and mounting in a building. One of these requirements is e.g. allowing for expansion of pipe segments due to heat, another is e.g. withstanding a predetermined pulling force exerted in an axial direction on the assembled outlet channel system (e.g. at least 45 kgf).

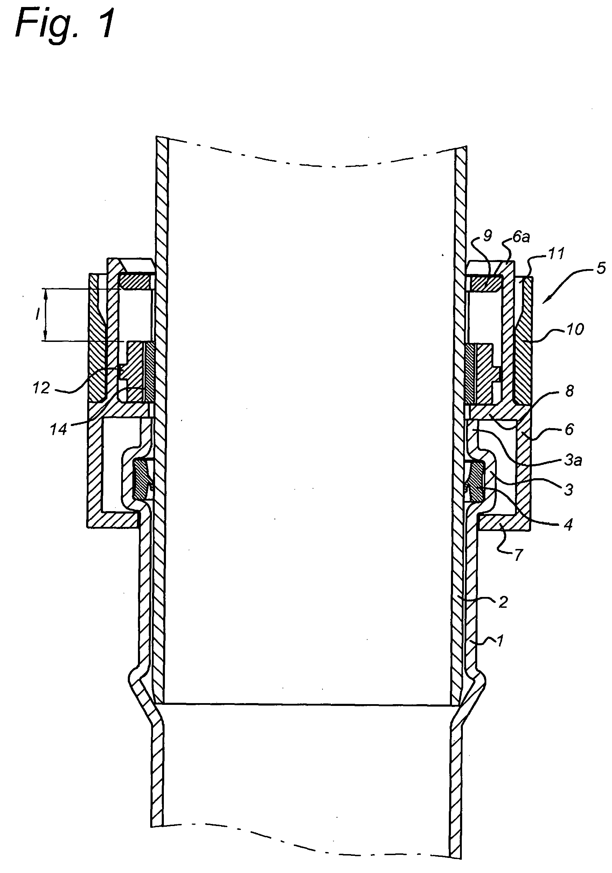

Fig. 1 shows a cross sectional view of a clamping device 5 according to an embodiment of the present invention installed on a first pipe end 1 and second pipe end 2, in a first operational position. The (outer) diameter of the second pipe end 2 is smaller than the (inner) diameter of the first pipe end 1, allowing to slide the two pipe ends 1, 2 into each other to form a combined pipe segment (also indicated as female pipe end 1 and male pipe end 2, respectively). In the first end pipe 1, an axially extending ridge 3 is provided, accommodating a sealing ring 4, to make a gas tight connection possible.

The clamping device 5 is of a generally cylindrical design, e.g. in the form of a coupling sleeve. The clamping device 5 comprises a main structural part 6, having a first edge 7 and a second edge 8, forming flange like elements allowing to position the clamping device 5 on the pipe end 1 (i.e. in contact with axially extending ridge 3 and a pipe edge 3a). This assures that no relative movement is possible between the first pipe end 1 and the clamping device 5.

The clamping device 5 further comprises a gripper element 12, in the embodiment shown as comprising a contact part 14. The main structural part 6 is arranged to allow movement of the gripper element 12 over a predetermined distance *l* as indicated (e.g. 1 cm).

In the embodiment shown in Fig. 1, the movement of the gripper element 12 in the clamping device is made possible by an upright wall of the main structural part 6, delimited by the second edge 8 thereof and by a third edge 9, which is part of an auxiliary structural part 10. The third edge 9 also is directed inwardly of the clamping device 5, forming a flange like structure at the top part thereof.

The auxiliary structural part 10 has an aperture 11 at its upper end, allowing passage of a snap fit element 6a of the main structural part 6. This allows to produce the clamping device 5 using three distinct elements, which can be easily assembled and manufactured separately. The parts, main structural part 6, auxiliary structural part 10 and gripper element 12, can each be manufactured using simple injection molding techniques. The gripper element 12 can be inserted into the main structural part 6, after which the auxiliary structural part 10 is slid over the main structural part 6, until the snap fit element 6a snaps into place through the apertures 11.

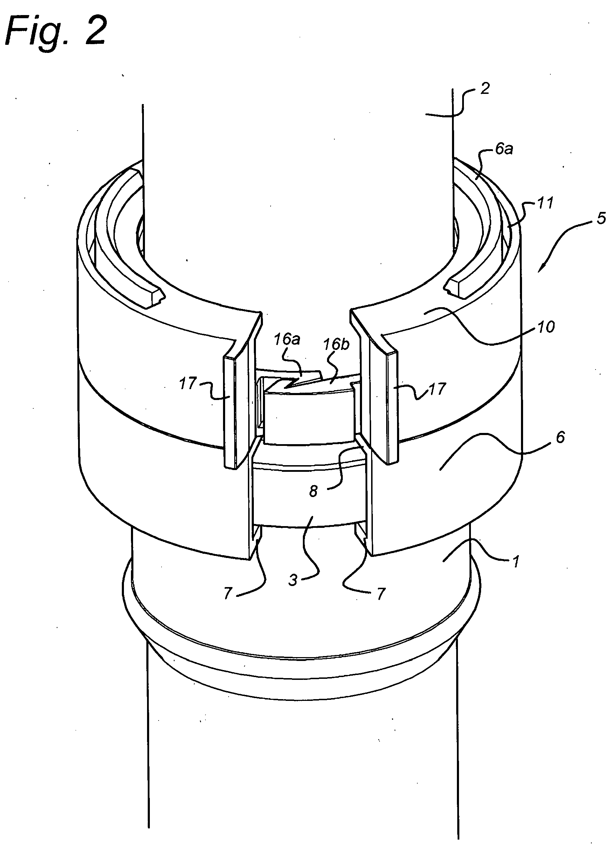

Fig. 2 shows a perspective view of the clamping device of Fig 1 on two pipe ends, in a first operational position.

In this embodiment it is shown, that the apertures 11 and snap fit elements 6a only span a part of the semi-cylindrical top part of the clamping device 5. It is noted, that in further embodiment, a plurality of apertures 11 and corresponding snap fit elements 6a may be provided. In general, the clamping device comprises an auxiliary structural part 10 provided with the third edge 9, the auxiliary structural part 10 being attachable to the main structural part 6. Attaching can be done using the aperture 11 and snap fit element 6a in the embodiment as described above with reference to Fig. 1, in alternative embodiments other fixation techniques such as gluing, fusing, etc., may be used.

On the front side of the clamping device 5, the gripper element 12 is provided with an arrester arrangement 16a, 16b. The parts of the gripper element 12 extending beyond the auxiliary structural part 10 are provided with an inner arresting element 16a, and an outer arresting element 16b, respectively. When bringing the inner and outer arresting elements 16a, 16b together, the clamping device 5 can be brought in a closed (latched, operational) position. Yet, the arrester arrangement 16a, 16b can be unlatched if needed.

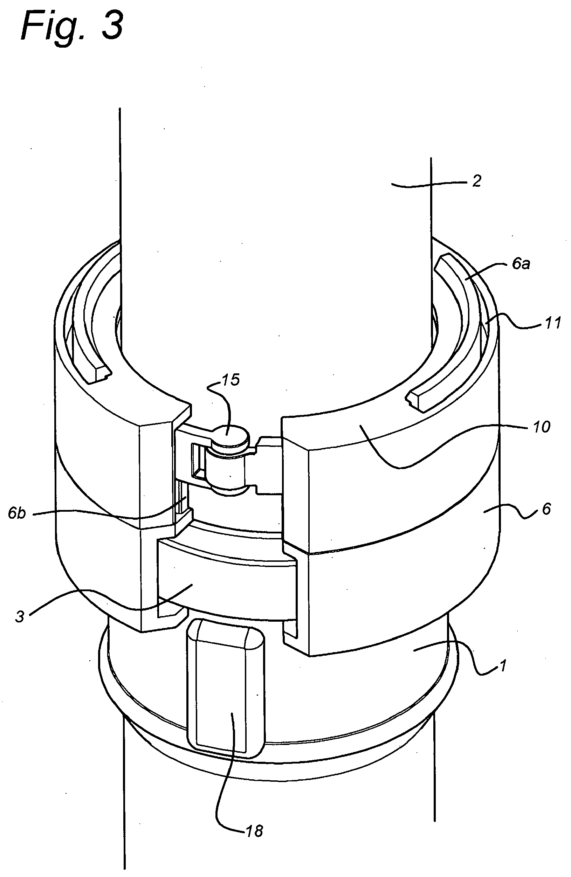

In Fig. 3, which shows a perspective view of the clamping device 5 in operation in a second position, it is also visible that the clamping device 5 in this embodiment comprise two semi-cylindrical parts, which in operation are connected to each other to connect the first pipe end 1 and second pipe end 2. In the embodiment shown, the two semi-cylindrical parts are connected to each other using a hinge structure 15 on one side of the gripper element 12. The hinge structure 15 shown is easy and simple to include in the injection molding process for the gripper element 12 (e.g. using a post element on one of the gripper elements 12 and a hook on the other gripper element 12).

In an embodiment the gripper element 12 is provided with a contact part 14, which is made of a compressible material. The combination of the gripper element 12 and contact part 14 may be produced in a single injection molding step. The compressible material is e.g. a rubber material, which has a high friction coefficient even when applying a low compression force.

In general, the other parts of the clamping device 5 are made from a material similar to that of the pipes in the flue gas outlet channel, which can withstand rain water, acid, UV radiation, and temperatures in the range from -20°C-+100°C.

When the clamping device 5 is installed on the combination of first pipe end 1 and second pipe end 2, as described above, it is fixedly held onto the first pipe end 1 by the first and second edge 7, 8 of the main structural part 6. The compressible material of the contact part 14 can be compressed, thereby holding the gripper element 12 firmly to the second pipe end 2.

The clamping device 5 can thus be installed easily and quickly by embracing the first and second pipe end 1, 2 using the hinge arrangement 15, and closing the clamping device 5 using the arresting elements 16a, 16b. For this, the clamping device 5 may further be provided with radially extending elements 17, e.g. in the form of fins 17 integrated with the auxiliary structural part 10 as shown in Fig. 2, and/or integrated with the main structural part 6.

As an alternative arrangement, the clamping device 5 may be provided with arresting elements 16a, 16b on both sides, allowing to install the clamping device 5 by closing two halves together using a double arrester arrangement. In a further alternative embodiment, the hinge 15 is provided by a locally thinner material of the gripper element 12, allowing a bending movement of two parts of the gripper element 12.

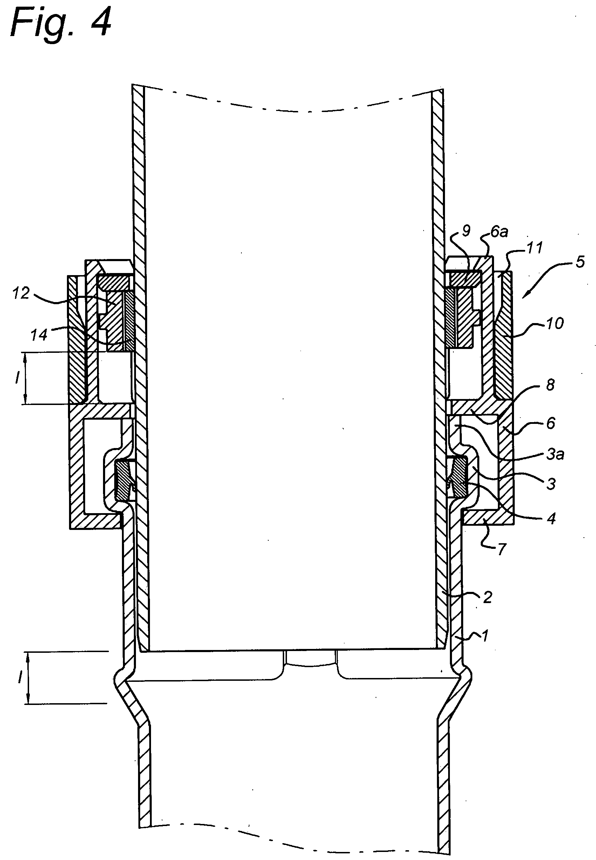

Fig. 3 shows a perspective view of the clamping device 5 in a second operational position, and Fig. 4 shows a cross sectional view of the clamping device 5 in a second operational position.

It is shown in Fig. 3 that the main structural element 6 comprises a number of mounting posts 6b, which allow the gripper element 12 to be installed inside the main structural element 6, while still allowing the axial movement of the gripper element 12 with respect to the framework of the clamping device 5.

Furthermore, in the embodiment as shown in Fig. 3, an auxiliary extension 18 is provided on the outside surface of the lower pipe end 1. This extension 18 has a dimension in the tangential direction of the pipe end 1 corresponding to the opening provided between the two main structural parts 6. This helps in orientation of the clamping device 5 when putting it in operation.

When installing the two pipe ends 1, 2, the ends are slid into each other as far as possible, as indicated in Fig. 1 and 2. Then the clamping device 5 is installed, with the gripper element 12 in its lower position. The possible movement of the gripper element 12 over a distance *l* as indicated in Fig. 1 and 4 inside the clamping device 5, allows mutual movement of the first pipe end 1 and second pipe end 2, without breaking the gas tight arrangement (provided by sealing ring 4). This allows e.g. to cater for mutual movement of pipe parts due to thermal influences.

Yet, when the gripper element 12 has reached its upper position as indicated in Fig. 3 and 4, the clamping device 5 can withstand a (pulling) force in the axial direction, due to the combination of gripper element 12 and third edge 9 of the clamping device 5. By choosing proper materials and proper dimensions, pulling force of up to 45 kgf (450N) or even more can be handled.

The present invention embodiments have been described above with reference to a number of exemplary embodiments as shown in the drawings. Modifications and alternative implementations of some parts or elements are possible, and are included in the scope of protection as defined in the appended claims. In the drawings, the pipes forming part of a flue gas outlet channel are shown in a vertical orientation, but it will be clear that other orientations are also possible.

## Claims

1. Combination of a first pipe end (1), a second pipe end (2), and a clamping device (5) for connecting the first pipe end (1) to the second pipe end (2),
wherein the clamping device (5) comprises a main structural part (6), the main structural part (6) comprising fixation elements (7, 8) for holding the clamping device (5) onto the first pipe end (1) without movement, and
a gripper element (12) for clamping onto an outer surface of the second pipe end (2), wherein the gripper element (12) is axially moveable over a predetermined distance (*l*) within the main structural part (6), wherein the fixation elements (7, 8) comprise a first edge (7) and a second edge (8) projecting inwardly of the main structural part (6), and the first pipe end (1) is provided with an axially extending ridge (3) and a pipe edge (3a), wherein the first edge (7) and second edge (8) are in contact with the axially extending ridge (3) and pipe edge (3a), respectively.

2. Combination according to claim 1, wherein the clamping device (5) further comprises a third edge (9) projecting inwardly of the main structural part (6), the axial distance between the second edge (8) and third edge (9) defining the predetermined distance (*l*).

3. Combination according to claim 1 or 2, wherein the predetermined distance is about 1 cm.

4. Combination according to any one of claims 1-3, wherein the gripper element (12) comprises a contact part (14) made of compressible material.

5. Combination according to claim 4, wherein the gripper element (12) is manufactured in a single molding operation.

6. Combination according to any one of claims 1-5, wherein the second pipe end (2) has an outer diameter smaller than an inner diameter of the first pipe end (1).

7. Combination according to any one of claims 1-6, wherein the clamping device (5) further comprises an auxiliary structural part (10) provided with the third edge (9), the auxiliary structural part (10) being attachable to the main structural part (6).

8. Combination according to claim 7, wherein the main structural part (6) and auxiliary structural part (10) are injection mold parts.

9. Combination according to any one of claims 1-8, wherein the main structural part (6), gripper element (12) of the clamping device (5) each comprise two semi-cylindrical parts.

10. Combination according to claim 9, wherein the semi-cylindrical parts of the gripper element (12) are connectable to each other by a double arresting arrangement (16a, 16b).

11. Combination according to claim 9, wherein the semi-cylindrical parts of the gripper element (12) are connectable to each other by a combination of a hinge structure (15) and an arrester arrangement (16a, 16b).

## Patentansprüche

1. Kombination aus einem ersten Leitungsende (1), einem zweiten Leitungsende (2), und einer Klemmvorrichtung (5) zur Verbindung des ersten Leitungsendes (1) mit dem zweiten Leitungsende (2), wobei die Klemmvorrichtung (5) ein Hauptbauteil (6), das Befestigungselemente (7, 8) zur unbeweglichen Befestigung der Klemmvorrichtung (5) an dem ersten Leitungsende (1) aufweist, und
ein Greifelement (12) zum Klemmen an eine äußere Oberfläche des zweiten Leitungsendes (2) umfasst, wobei das Greifelement (12) axial entlang einer festgelegten Strecke (1) innerhalb des Hauptbauteils (6) beweglich ist, wobei die Befestigungselemente (7, 8) einen ersten Vorsprung (7) und einen zweiten Vorsprung (8) aufweisen, die ins Innere des Hauptbauteils (6) vorstehen, und wobei das erste Leitungsende (1) mit einer axial ausgedehnte Rippe (3) und eine Leitungskante (3a) versehen ist, wobei der erste Vorsprung (7) und der zweite Vorsprung (8) in Kontakt mit der axial ausgedehnten Rippe (3) beziehungsweise dem Leitungsende (3a) stehen.

2. Kombination gemäß Anspruch 1, wobei die Klemmvorrichtung (5) zusätzlich einen dritten Vorsprung (9) aufweist, der ins Innere des Hauptbauteils (6) vorsteht, wobei die axiale Strecke zwischen dem zweiten Vorsprung (8) und dem dritten Vorsprung (9) die festgelegte Strecke (1) definiert.

3. Kombination gemäß Anspruch 1 oder 2, wobei die festgelegte Strecke etwa 1 cm lang ist.

4. Kombination gemäß einem der Ansprüche 1-3, wobei das Greifelement (12) einen Kontaktteil (14) aus einem kompressiblen Material aufweist.

5. Kombination gemäß Anspruch 4, wobei das Greifelement (12) in einem einzigen Gießschritt hergestellt ist.

6. Kombination gemäß einem der Ansprüche 1-5, wobei das zweite Leitungsende (2) einen äußeren Durchmesser hat, der kleiner als ein innerer Durchmesser des ersten Leitungsendes (1) ist.

7. Kombination gemäß einem der Ansprüche 1-6, wobei die Klemmvorrichtung (5) zusätzlich ein Hilfsbauteil (10) aufweist, das den dritten Vorsprung (9) bereitstellt, wobei das Hilfsbauteil (10) sich an dem Hauptbauteil (6) befestigen lässt.

8. Kombination gemäß Anspruch 7, wobei das Hauptbauteil (6) und das Hilfsbauteil (10) Spritzgussteile sind.

9. Kombination gemäß einem der Ansprüche 1-8, wobei das Hauptbauteil (6) und das Greifelement (12) der Klemmvorrichtung (5) jeweils zwei halb-zylindrische Teile aufweisen.

10. Kombination gemäß Anspruch 9, wobei die halb-zylindrischen Teile des Greifelements (12) miteinander durch eine zweifache Verriegelungsvorrichtung (16a, 16b) verbindbar sind.

11. Kombination gemäß Anspruch 9, wobei die halb-zylindrischen Teile des Greifelements (12) durch eine Kombination eines Scharnierbauteils (15) und einer Verriegelungsvorrichtung (16a, 16b) miteinander verbindbar sind.

## Revendications

1. Combinaison d'une première extrémité de tuyau (1), d'une seconde extrémité de tuyau (2) et d'un dispositif de serrage (5) destiné à relier la première extrémité de tuyau (1) à la seconde extrémité de tuyau (2), dans laquelle le dispositif de serrage (5) comprend une partie de structure principale (6), la partie de structure principale (6) comprenant des éléments de fixation (7, 8) pour maintenir sans mouvement le dispositif de serrage (5) sur la première extrémité de tuyau (1), et un élément de préhension (12) pour serrage sur une surface extérieure de la seconde extrémité de tuyau (2),
dans laquelle l'élément de préhension (12) est mobile axialement sur une distance prédéterminée (1) à l'intérieur de la partie de structure principale (6), dans laquelle les éléments de fixation (7, 8) comprennent un premier bord (7) et un deuxième bord (8) faisant saillie vers l'intérieur de la partie de structure principale (6), et la première extrémité de tuyau (1) est munie d'un rebord s'étendant axialement (3) et d'un bord de tuyau (3a), dans laquelle le premier bord (7) et le deuxième bord (8) sont en contact avec le rebord s'étendant axialement (3) et le bord de tuyau (3a), respectivement.

2. Combinaison selon la revendication 1, dans laquelle le dispositif de serrage (5) comprend de plus un troisième bord (9) faisant saillie vers l'intérieur de la partie de structure principale (6), la distance axiale entre le deuxième bord (8) et le troisième bord (9) définissant la distance prédéterminée (1).

3. Combinaison selon la revendication 1 ou 2, dans laquelle la distance prédéterminée est d'environ 1 cm.

4. Combinaison selon l'une quelconque des revendications 1 à 3, dans laquelle l'élément de préhension (12) comprend une partie de contact (14) constituée d'un matériau compressible.

5. Combinaison selon la revendication 4, dans laquelle l'élément de préhension (12) est fabriqué en une unique opération de moulage.

6. Combinaison selon l'une quelconque des revendications 1 à 5, dans laquelle la seconde extrémité de tuyau (2) a un diamètre extérieur plus petit qu'un diamètre intérieur de la première extrémité de tuyau (1).

7. Combinaison selon l'une quelconque des revendications 1 à 6, dans laquelle le dispositif de serrage (5) comprend de plus une partie de structure auxiliaire (10) munie du troisième bord (9), la partie de structure auxiliaire (10) pouvant être fixée sur la partie de structure principale (6).

8. Combinaison selon la revendication 7, dans laquelle la partie de structure principale (6) et la partie de structure auxiliaire (12) sont des pièces moulées par injection.

9. Combinaison selon l'une quelconque des revendications 1 à 8, dans laquelle la partie de structure principale (6), l'élément de préhension (12) du dispositif de serrage (5) sont chacun constitués de deux parties semi cylindriques.

10. Combinaison selon la revendication 9, dans laquelle les parties semi cylindriques de l'élément de préhension (12) peuvent être reliées l'une à l'autre par un double agencement de blocage.

11. Combinaison selon la revendication 9, dans laquelle les parties semi cylindriques de l'élément de préhension (12) peuvent être reliées l'une à l'autre par une combinaison d'une structure d'articulation (15) et d'un agencement de blocage (16a, 16b).
